# EUROPÄISCHE PATENTSCHRIFT

(11) **EP 2 641 656 B1**
(45) Veröffentlichungstag und Bekanntmachung des Hinweises auf die Patenterteilung: **20.02.2019**
(21) Anmeldenummer: 12001933.6
(22) Anmeldetag: 20.03.2012
(51) Int. Cl.: B01L 3/02

(54) **Elektrische Pipettiervorrichtung und Verfahren zum Betreiben einer elektrischen Pipettiervorrichtung**
Electrical pipette device and method for operating same
Dispositif de pipetage électrique et procédé de fonctionnement d'un dispositif de pipetage électrique

(43) Veröffentlichungstag der Anmeldung: 25.09.2013
(73) Patentinhaber: Eppendorf AG, 22339 Hamburg (DE)
(72) Erfinder: Andres, Karl-Friedrich, 22941 Bargeheide (DE); Jacobi, Janine, 22083 Hamburg (DE); Molitor, Peter, 22143 Hamburg (DE); Schmidt, Peter, 23566 Lübeck (DE)
(74) Vertreter: Ricker, Mathias

(56) Entgegenhaltungen:
- EP-A1- 1 859 869
- EP-A1- 1 878 500
- WO-A1-00/51739
- WO-A1-2005/079988
- US-A1- 2005 118 069

## Beschreibung

Die Erfindung bezieht sich auf eine elektrische Pipettiervorrichtung und ein Verfahren zum Betreiben einer elektrischen Pipettiervorrichtung.

Solche Pipettiervorrichtungen werden üblicherweise in medizinischen, biologischen, biochemischen, chemischen und anderen Laboratorien verwendet. Sie dienen im Labor zum Transport und Übertragen von fluiden Proben mit kleinen Volumina, insbesondere zur präzisen Dosierung der Proben. Bei Pipettiervorrichtungen werden z.B. flüssige Proben mittels Unterdruck in Pipettenbehälter, z.B. Pipettenspitzen, eingesaugt, dort gelagert, und am Zielort wieder aus diesen abgegeben. Eine elektrische Pipettiervorrichtung verwendet mindestens einen elektrischen Betriebsparameter, der den Betrieb der Pipettiervorrichtung zumindest beeinflusst oder steuert. Elektrische Pipettiervorrichtungen werden nachfolgend auch abgekürzt mit dem Begriff "Pipettiervorrichtungen" bezeichnet.

Zu den Pipettiervorrichtungen gehören z.B. handgehaltene Pipetten und Dispenser. Unter einer Pipette wird ein Gerät verstanden, bei dem mittels einer Bewegungseinrichtung, die dem Gerät zugeordnet ist und die insbesondere einen Kolben aufweisen kann, eine zu pipettierende Probe in einen mit der Pipette verbundenen Pipettierbehälter eingesaugt werden kann. Bei einer Luftpolsterpipette ist der Kolben dem Gerät zugeordnet und zwischen der zu pipettierenden Probe und dem Kolbenende befindet sich ein Luftpolster, das beim Aufnehmen der Probe in den Pipettierbehälter unter einem Unterdruck steht, durch den die Probe in den Pipettierbehälter gesaugt wird. Unter einem Dispenser wird ein Gerät verstanden, bei dem mittels einer Bewegungseinrichtung, die insbesondere einen Kolben aufweisen kann, ein zu pipettierendes Volumen in einen mit dem Dispenser verbundenen Pipettierbehälter eingesaugt werden kann, wobei die Bewegungseinrichtung zumindest teilweise dem Pipettierbehälter zugeordnet ist, indem z.B. der Kolben im Pipettierbehälter angeordnet ist. Beim Dispenser befindet sich das Kolbenende sehr nahe an der zu pipettierenden Probe oder in Kontakt mit dieser, weshalb man den Dispenser auch als Direktverdrängerpipette bezeichnet.

Bei einer Pipettiervorrichtung kann die durch eine einzelne Betätigung abgegebene Probenmenge der in das Gerät aufgesaugten Probenmenge entsprechen. Es kann aber auch vorgesehen sein, dass eine mehreren Abgabemengen entsprechende aufgenommene Probenmenge schrittweise wieder abgegeben wird. Zudem wird zwischen Einkanal-Pipettiervorrichtungen und Mehrkanal-Pipettiervorrichtungen unterschieden, wobei Einkanal-Pipettiervorrichtungen nur einen einzigen Abgabe-/Aufnahmekanal enthalten und Mehrkanal-Pipettiervorrichtungen mehrere Abgabe-/Aufnahmekanäle enthalten, die insbesondere das parallele Abgeben oder Aufnehmen mehrerer Proben erlauben. Pipettiervorrichtungen können insbesondere handbetrieben sein, d.h. ein durch den Benutzer erzeugtes Antreiben der Bewegungseinrichtung implizieren, und/oder können insbesondere elektrisch betrieben sein. Auch im Falle des Handbetriebs der Bewegungseinrichtung kann eine Pipettiervorrichtung eine elektrische Pipettiervorrichtung sein, indem z.B. das aktuelle Ausgabevolumen oder mindestens ein anderer Betriebsparameter elektrisch eingestellt wird.

Beispiele für eine handgehaltene, elektronische Pipette ist die Eppendorf Xplorer® der Eppendorf AG, Deutschland, Hamburg; Beispiele für handgehaltene, elektronische Dispenser sind die Multipette stream® und Xstream® der Eppendorf AG, Deutschland, Hamburg. EP 1 859 869 A1 und EP 1 878 500 A1 zeigen eine Pipettiervorrichtung mit elektronischer Steuereinrichtung und Speicher in dem verschiedene Parameter für verschiedene Betriebsarten gespeichert werden.

Elektrische Pipettiervorrichtungen bieten zahlreiche Vorteile gegenüber nicht-elektrischen Pipettiervorrichtungen, da eine Vielzahl von Funktionen in einfacher Weise implementiert werden können. Insbesondere lässt sich bei elektrischen Pipettiervorrichtungen die Durchführung von bestimmten, programmgesteuerten Pipettiervorgängen vereinfachen, indem diese automatisiert oder teil-automatisiert werden. Typische Betriebsparameter zum Steuern solcher Pipettiervorgänge mittels entsprechender Pipettierprogramme betreffen das Volumen beim Ansaugen oder Abgeben von Flüssigkeit, deren Reihenfolge und Wiederholungen, und gegebenenfalls zeitliche Parameter bei der zeitlichen Verteilung dieser Vorgänge.

Eine elektrische Pipettiervorrichtung kann dazu ausgebildet sein, in einem Betriebsmodus oder mehreren Betriebsmodi betrieben zu werden. Ein Betriebsmodus kann vorsehen, dass ein Satz mit einem oder mehreren Betriebsparametern der Pipettiervorrichtung, die einen Pipettiervorgang der Pipettiervorrichtung beeinflussen oder steuern, automatisch abgefragt, eingestellt und/oder angewandt wird. Die Entscheidung, wie der Wert eines Betriebsparameters lauten soll, muss bei der Benutzung der Pipettiervorrichtung in der Regel vom Benutzer jeweils getroffen und der Betriebsparameter entsprechend festgelegt werden. Je nach erforderlicher Anzahl der Betriebsparameter kostet das Festlegen der Betriebsparameter den Benutzer Zeit. Insbesondere wiederholt sich dieses Festlegen der Betriebsparameter, falls ein Pipettiervorgang, dessen Parameterwerte zuvor eingestellt wurden, nach der zwischenzeitlichen Durchführung eines anderen Betriebsvorgangs mit anderen Betriebsparametern erneut durchgeführt werden soll, so dass dieselben Betriebsparameter erneut festgelegt werden müssen. Ein Ansatz zur Lösung des Problems liegt bei bekannten programmierbaren, elektrischen Pipettiervorrichtungen darin, dass ein Satz von Betriebsparameterwerten jeweils vom Benutzer vorprogrammiert werden kann, vom Benutzer in der Pipettiervorrichtung unter einem bestimmten Namen und gegebenenfalls mittels Durchführung weiterer Editierschritte gespeichert werden kann, und unter diesem Namen bei Bedarf vom Benutzer geladen werden kann, um einen Pipettiervorgang unter Verwendung dieses Parameterwertesatzes zu betreiben. Ein solches Vorgehen erfordert ein relativ genaues Planen der gewünschten Arbeitsvorgänge.

Aufgabe der vorliegenden Erfindung ist es, eine elektrische Pipettiervorrichtung und ein Verfahren zum Betreiben einer elektrischen Pipettiervorrichtung bereitzustellen, deren Verwendung für den Benutzer komfortabel ist.

Die Erfindung löst diese Aufgabe durch die Pipettiervorrichtung nach Anspruch 1 und das Verfahren nach Anspruch 13. Bevorzugte Ausgestaltungen sind insbesondere Gegenstände der Unteransprüche.

Die erfindungsgemäße Pipettiervorrichtung, zur Durchführung eines zumindest teilweise elektrisch gesteuerten Pipettiervorgangs an mindestens einer fluiden Laborprobe gemäß mindestens eines Betriebsmodus der Pipettiervorrichtung, weist auf:
- eine elektrische Steuereinrichtung (17) zum Steuern des Pipettiervorgangs, der durch einen vom Benutzer festlegbaren Betriebsparametersatz steuerbar ist, der einem Betriebsmodus zugeordnet ist und der jeweils mindestens einen Betriebsparameter umfasst, wobei der Benutzer zum Festlegendes Betriebsparameters den gewünschten Wert des Betriebsparameters als Parameterwert auswählt und auf diese Weise einen Parameterwertesatz mit mindestens einem Parameterwert bestimmt, wobei dieser Parameterwertesatz insbesondere das Anwenden der parametergemäßen Programmfunktion dieses Betriebsmodus ermöglicht,
- mindestens eine Bedieneinrichtung (12, 13, 14a, 14b) zum Festlegen des Betriebsparametersatzes durch den Benutzer,
- eine elektrische Speichereinrichtung (18) zum Speichern des mindestens einen Parameterwertesatzes,
wobei die elektrische Steuereinrichtung (17) dazu ausgebildet ist, den mindestens einen vom Benutzer bestimmten Parameterwertesatz automatisch als den mindestens einen historischen Parameterwertesatz dieses Betriebsmodus in der Speichereinrichtung (18) zu speichern,
und insbesondere dazu ausgebildet ist, nach einer Änderung des Betriebsparametersatzes dieses Betriebsmodus den mindestens einen automatisch gespeicherten historischen Parameterwertesatz dieses Betriebsmodus zur nachfolgenden Steuerung des mindestens einen, gleichen Pipettiervorgangs erneut bereitzustellen.

Die erfindungsgemäße Pipettiervorrichtung bietet den Vorteil, dass mindestens ein in der Betriebshistorie der Pipettiervorrichtung bereits zuvor vom Benutzer festgelegter und insbesondere verwendeter Parameterwertesatz nicht erneut festgelegt werden muss, falls die Historiefunktion der Pipettiervorrichtung aktiv ist, insbesondere aktiviert ist. Auf diese Weise kann sich der Benutzer im Laufe der Zeit zahlreiche Editiervorgänge an der Pipettiervorrichtung ersparen. Die erfindungsgemäße Pipettiervorrichtung ist deshalb komfortabler benutzbar. Dies gilt umso mehr, als dass die Editiervorgänge nicht nur zahlreiche zusätzliche Interaktionen des Benutzers mit der Pipettiervorrichtung bedingen, sondern auch komplexere, oftmals wenig intuitive Interaktionen erfordern, die relativ unkomfortabel und fehleranfällig sind. Die Benutzung der erfindungsgemäßen Pipettiervorrichtung ist deshalb auch sicherer.

Die Funktion des automatischen Speicherns des historischen Parameterwertesatzes, nämlich dass die elektrische Steuereinrichtung dazu ausgebildet ist, den mindestens einen vom Benutzer bestimmten Parameterwertesatz, der dem Betriebsparametersatz eines Betriebsmodus zugeordnet ist, automatisch als mindestens einen historischen Parameterwertesatz dieses Betriebsmodus in der Speichereinrichtung zu speichern, wird auch als Historiefunktion bezeichnet. Vorzugsweise ist/sind die Pipettiervorrichtung und/oder die Steuereinrichtung dazu ausgebildet, dass die Funktion des automatischen Speicherns des historischen Parameterwertesatzes vom Benutzer wahlweise aktivierbar und/oder deaktivierbar ist. Dies kann über ein Schaltelement der Bedieneinrichtung erfolgen, und/oder das Setzen einer Software-Variable bzw. eines Betriebsparameters der Pipettiervorrichtung.

Als Parameterwert wird vorliegend der konkrete Wert bezeichnet, den ein Betriebsparameter gemäß der Festlegung durch den Benutzer oder durch andere Festlegung einnimmt.

Die Speichereinrichtung ist vorzugsweise ein von der Steuereinrichtung ansprechbarer, insbesondere durch Software definierter, Speicherteilbereich in einem größeren Speicherbereich. Der Speicherteilbereich kann eine Datei sein. Der Speicherbereich kann ein Datenspeicher sein. Ein Speicherbereich kann ein durch Software verwalteter nicht-physikalischer Speicherraum sein, der physikalisch in einem Hardwarespeicher angeordnet ist. Die Speichereinrichtung kann einen Hardwarespeicher aufweisen. Der Hardwarespeicher ist vorzugsweise ein permanenter Datenspeicher, vorzugsweise ein FLASH-Speicher. Der Hardwarespeicher ist vorzugsweise dazu ausgebildet, vorzugsweise mindestens 100000, vorzugsweise mindestens 150000 oder vorzugsweise mindestens 300000 Schreibzyklen oder Löschzyklen durchführen zu können.

Die erfindungsgemäße Pipettiervorrichtung ist vorzugsweise dazu ausgebildet, zur Durchführung mindestens eines Pipettiervorgangs gemäß mindestens einem Betriebsmodus der Pipettiervorrichtung verwendet zu werden. Insbesondere ist die erfindungsgemäße Pipettiervorrichtung vorzugsweise dazu ausgebildet, zur Durchführung von Pipettiervorgängen gemäß mehrerer Betriebsmodi der Pipettiervorrichtung verwendet zu werden. In einem Betriebsmodus ist vorzugsweise jeweils ein bestimmter Satz von Betriebsparametern (Betriebsparametersatz) vorgesehen, der zur Steuerung eines Pipettiervorgangs dient, der in diesem Betriebsmodus durchgeführt wird.

Ein Pipettiervorgang sieht typischer Weise vor, dass gemäß eines Pipettierprogramms eine bestimmte Probenmenge aus einem Startbehälter in einen mit der Pipettiervorrichtung verbundenen Pipettierbehälter aufgenommen wird und anschließend wieder in einen Zielbehälter abgegeben wird, insbesondere dosiert abgegeben wird. Je nach Anwendung können die Aufnahme und oder die Abgabe der Probe(n) bestimmten Ordnungsmustern, insbesondere Reihenfolgen, von Aufnahme- und Abgabeschritten folgen, können zeitabhängig erfolgen und können zeitlich abgestimmt sein. Ein Pipettiervorgang lässt sich vorzugsweise durch einen Satz aus Betriebsparametern steuern, mit denen die genannten Vorgänge in der gewünschten Weise beeinflussbar sind.

Betriebsparameter zum Steuern eines Pipettiervorgangs betreffen vorzugsweise die Einstellung des zu pipettierenden Volumens, beim Schritt des Ansaugens der Probe in einen mit der Pipettiervorrichtung verbundenen Pipettierbehälter oder beim Schritt des Abgebens der Probe aus diesem Pipettierbehälter, gegebenenfalls die Reihenfolge und Wiederholungen dieser Schritte, und gegebenenfalls zeitliche Parameter bei der zeitlichen Verteilung dieser Vorgänge, insbesondere auch die zeitliche Veränderung solcher Vorgänge, insbesondere Geschwindigkeit und/oder Beschleunigung des Ansaugens oder Abgebens der Probe.

Der Pipettiervorgang ist vorzugsweise durch den Betriebsparametersatz eindeutig festgelegt. Dieser Betriebsparametersatz wird vorzugsweise zumindest teilweise und vorzugsweise vollständig vom Benutzer ausgewählt und/oder eingegeben, insbesondere über die Bedieneinrichtung der Pipettiervorrichtung.

Es ist jedoch möglich, dass ein Pipettiervorgang durch den Betriebsparametersatz nicht eindeutig festgelegt ist. Es ist auch möglich und bevorzugt, dass mindestens ein Betriebsparameter nicht vom Benutzer festgelegt wird, sondern z.B. von der Pipettiervorrichtung vorgegeben wird, indem er dort z.B. als vorbekannt gespeichert ist. Die Pipettiervorrichtung kann dazu ausgebildet sein, mindestens einen Betriebsparameter automatisch zu bestimmen.

Die Pipettiervorrichtung kann z.B. eine Sensoreinrichtung aufweisen, z.B. einen Sensor zur Erfassung eines Umgebungsparameters, insbesondere der Temperatur, der Luftfeuchtigkeit oder des Drucks. Die Sensoreinrichtung kann auch zur Durchführung einer Messung ausgebildet sein, mit dem der Typ eines mit der Pipettiervorrichtung verbundenen Pipettierbehälters, insbesondere das maximale Füllvolumen des Pipettierbehälters, ermittelbar ist. Die Pipettiervorrichtung kann dazu ausgebildet sein, mindestens einen Betriebsparameter automatisch in Abhängigkeit vom Messwert der Sensoreinrichtung zu bestimmen.

Nachfolgend werden Betriebsmodi und die Ihnen vorzugsweise zugeordneten Betriebsparameter beschrieben, die jeweils vorzugsweise bei der Pipettiervorrichtung vorgesehen sind:
Vorzugsweise ist ein Betriebsparameter vorgesehen, mit dem ein zu pipettierendes Pipettiervolumen definiert wird. Es kann ein Betriebsparameter vorgesehen sein, mit dem ein während eines Ansaugschrittes anzusaugendes Ansaugvolumen definiert wird und/oder es kann ein Betriebsparameter vorgesehen sein, mit dem ein während eines Abgabeschrittes abzugebendes Abgabevolumen definiert wird.

Vorzugsweise ist mindestens ein Betriebsparameter vorgesehen, mit dem die Zahl von unmittelbar aufeinander folgenden oder mittelbar aufeinander folgenden Pipettiervolumina festgelegt wird, vorzugsweise mindestens ein Betriebsparameter, mit dem die Zahl der Ansaugschritte und/oder der Abgabeschritte und jeweils vorzugsweise auch die jeweils zugehörigen Pipettiervolumina, die jeweils zugehörigen Pipettiergeschwindigkeiten und/oder -beschleunigungen, und/oder die jeweils zugehörigen Zeitabstände zwischen den Schritten festgelegt wird.

Vorzugsweise betrifft ein Betriebsmodus das "Dispensieren" (DIS) einer Probe. Zugeordnete Betriebsparameter sind jeweils vorzugsweise: das Volumen der Einzelprobe, betreffend das Pipettiervolumen während eines von mehreren Abgabeschritten; die Anzahl der Abgabeschritte; die Geschwindigkeit bei der Aufnahme der Probe(n); die Geschwindigkeit bei der Abgabe der Probe(n). Die Dispensierfunktion eignet sich insbesondere zum schnellen Befüllen einer Mikrotiterplatte mit einer Reagenzflüssigkeit und kann z.B. zur Durchführung eines ELISA verwendet werden .

Vorzugsweise betrifft ein Betriebsmodus das "Automatische Dispensieren" (ADS) einer Probe. Zugeordnete Betriebsparameter sind jeweils vorzugsweise: das Volumen der Einzelprobe, betreffend das Pipettiervolumen während eines von mehreren Abgabeschritten; die Anzahl der Abgabeschritte; die Dauer des Zeitintervalls, gemäß dem die Abgabeschritte automatisch in konstanten Zeitabständen nacheinander durchgeführt werden - das Zeitintervall kann diese Zeitabstände festlegen oder z.B. die Verzögerung zwischen Ende und Beginn aufeinander folgender Abgabeschritte; die Geschwindigkeit bei der Aufnahme der Probe(n); die Geschwindigkeit bei der Abgabe der Probe(n). Diese Dispensierfunktion eignet sich noch komfortabler zum Befüllen einer Mikrotiterplatte, da der Anwender nicht immer wieder einen Abgabeschritt durch Betätigung, z.B. Tastendruck, auslösen muss, sondern die Abgabe nach dem Starten des automatischen Dispensierens zeitgesteuert erfolgt. Wie jedes andere Betriebsprogramm eines Betriebsmodus auch, kann das automatische Dispensieren unter der Bedingung erfolgen, dass das entsprechende Programm zumindest bei ununterbrochener Betätigung eines Betätigungselementes erfolgt, z.B. bei ununterbrochen gedrückt gehaltener Taste. Dies ist zum Beispiel bei langen Dispensierserien oder Reaktionen, bei denen eine genaue Beachtung eines Zeitfensters erforderlich ist, vorteilhaft. Die automatische Dispensierfunktion eignet sich noch komfortabler zum Befüllen einer Mikrotiterplatte, da der Benutzer einen einzelnen Abgabeschritt hier nicht selbst auslösen muss, sondern dies automatisch erfolgt, was z.B. zur Durchführung eines ELISA verwendet werden kann.

Vorzugsweise betrifft ein Betriebsmodus das "Pipettieren" (Pip) einer Probe. Zugeordnete Betriebsparameter sind jeweils vorzugsweise: das Volumen der zu pipettierenden Probe; die Geschwindigkeit bei der Aufnahme der Probe; die Geschwindigkeit bei der Abgabe der Probe.

Vorzugsweise betrifft ein Betriebsmodus das "Pipettieren mit anschließendem Mischen" (P/Mix) einer Probe. Zugeordnete Betriebsparameter sind jeweils vorzugsweise: das Volumen der anzusaugenden und/oder der abzugebenden Probe; das Mischvolumen; die Anzahl der Mischzyklen; die Geschwindigkeit bei der Aufnahme der Probe; die Geschwindigkeit bei der Abgabe der Probe. Die Funktion "Pipettieren mit anschließendem Mischen" empfiehlt sich beispielsweise für das Pipettieren von sehr kleinen Volumina. Wird ein Dosiervolumen < 10 *µ* L gewählt, empfiehlt es sich, dieses in die jeweilige Reaktionsflüssigkeit einzuspülen. Dies ist möglich durch das automatische Starten einer Mischbewegung nach Abgabe der Flüssigkeit. Das Mischvolumen sowie die Mischzyklen werden zuvor definiert. Eine Anwendung für diesen Betriebsmodus ist z.B. die Abgabe einer aufgrund ihrer physikalischen Eigenschaften schwerer als Wasser zu dosierenden Flüssigkeit, deren Reste im Pipettierbehälter, insbesondere der Pipettenspitze, dann mit Hilfe der bereits vorgelegten Flüssigkeit aus dem Pipettierbehälter, bzw. der Pipettenspitze, gespült wird. Eine weitere Anwendung wäre das sofortige Mischen der abgegebenen Flüssigkeit mit der vorgelegten Flüssigkeit. Vorteilhaft ist dieser Betriebsmodus z.B. beim Zugeben von DNA zu einer PCR-Mischlösung.

Vorzugsweise betrifft ein Betriebsmodus die "Mehrfachaufnahme" einer Probe, auch bezeichnet als "Umgekehrtes Dispensieren" oder als "ASP" für Aspirating. Zugeordnete Betriebsparameter sind jeweils vorzugsweise: das Volumen der anzusaugenden Probe(n); die Anzahl der Proben; die Geschwindigkeit bei Aufnahme; die Geschwindigkeit bei Abgabe. Die Funktion dient der Mehrfachaufnahme einer Flüssigkeitsmenge und Abgabe der Gesamtmenge. Hierbei ist eine Mehrfachbefüllung des Pipettierbehälters in einem Vorgang nicht vorgesehen. Die Geschwindigkeit ist für alle Proben gleich. In der Ausführung geschieht vorzugsweise folgendes: Ausgehend von der Grundposition nimmt die Pipettiervorrichtung durch Betätigen erster Art der Bedieneinrichtung jeweils ein Teilvolumen auf. Nach Aufnahme des letzten Teilvolumens gibt die Pipettiervorrichtung vorzugsweise eine Warnmeldung aus, die vorzugsweise durch ein Betätigen zweiter Art der Bedieneinrichtung durch den Anwender bestätigt werden muss. Bei der nächsten Betätigung zweiter Art der Bedieneinrichtung wird das Gesamtvolumen wieder abgegeben. Zur Betätigung erster oder zweiter Art weist die Bedieneinrichtung vorzugsweise mindestens zwei Bedienknöpfe auf, einen zum Eingeben eines Bedienungssignals "erster Art" an die Steuereinrichtung, und einen um Eingeben eines Bedienungssignals "zweiter Art" an die Steuereinrichtung. Die Bedieneinrichtung kann insbesondere eine Wippe aufweisen, die insbesondere um eine Achse senkrecht zur Längsachse der Pipettiervorrichtung schwenkbar ist, zwischen einer ersten Signal-Auslöse-Position ("Wippe up") zur Betätigung erster Art und einer zweiten Signal-Auslöse-Position ("Wippe down") zur Betätigung zweiter Art.

Vorzugsweise betrifft ein Betriebsmodus das "Diluting" (Dil) einer Probe, auch bezeichnet als "Verdünnung". Zugeordnete Betriebsparameter sind jeweils vorzugsweise: das Probenvolumen; das Luftblasenvolumen; das Diluentvolumen; die Geschwindigkeit der Aufnahme; die Geschwindigkeit der Abgabe. Das maximale Diluentvolumen = Nennvolumen - (Probe + Luftblase)). Diese Funktion dient der Aufnahme einer Probe und eines Diluents mit Trennung durch eine Luftblase und Abgabe der Gesamtmenge. Die Geschwindigkeit ist für alle Teilvolumina gleich. In der Ausführung geschieht vorzugsweise folgendes: Ausgehend von der Grundposition nimmt die Pipettiervorrichtung zuerst das Diluentvolumen, dann die Luftblase und zum Schluss die Probe auf. Jede Aufnahme wird vorzugsweise separat durch eine Betätigung der Bedieneinrichtung erster Art ausgelöst. Danach wird die Gesamtmenge in Einem abgegeben.

Vorzugsweise betrifft ein Betriebsmodus das "Sequentielle Dispensieren" (SeqD) von Proben. Zugeordnete Betriebsparameter sind jeweils vorzugsweise: Anzahl der Proben (vorzugsweise bis zu einer fest vorgegebenen Maximalanzahl Nmax von vorzugsweise 5 <= Nmax <= 15, vorzugsweise Nmax = 10); Einzelvolumen der Einzelproben; Geschwindigkeit der Aufnahme; Geschwindigkeit der Abgabe. Diese Funktion dient dem sequentiellen Dispensieren von Nmax frei wählbaren Volumina, hierbei ist vorzugsweise eine mehrfache Befüllung des Pipettierbehälters nicht vorgesehen. Die Geschwindigkeit ist für alle Proben gleich. Die Anzahl der Proben ist vorzugsweise der führende Parameter für die Eingabe der Einzelvolumen. Die Pipette muss vorzugsweise bei Eingabe der Volumina immer überprüfen, ob das Maximalvolumen der Pipettiervorrichtungen nicht überschritten wird, ggf. wird eine Warnmeldung ausgegeben. Nach Eingabe aller Parameter nimmt die Pipettiervorrichtung nach Betätigen erster Art der Bedieneinrichtung das Gesamtvolumen auf und nach Betätigen zweiter Art der Bedieneinrichtung jeweils ein Einzelvolumen ab. Alle weiteren Abläufe verhalten sich vorzugsweise wie das normale Dispensieren.

Vorzugsweise betrifft ein Betriebsmodus das "Sequentielle Pipettieren" (SeqP) von Proben. Zugeordnete Betriebsparameter sind jeweils vorzugsweise: Anzahl der Proben (vorzugsweise bis zu einer fest vorgegebenen Maximalanzahl Nmax von vorzugsweise 5 <= Nmax <= 15, vorzugsweise Nmax = 10); Einzelvolumen der Einzelproben; Geschwindigkeit der Aufnahme; Geschwindigkeit der Abgabe. Diese Funktion dient dem Pipettieren von maximal Nmax frei wählbaren Volumina, die vor dem Start programmiert werden und in Ihrer Abfolge feststehen. Die Geschwindigkeit ist für alle Proben vorzugsweise gleich, um eine einfache Bedienung dieses Betriebsmodus zu ermöglichen Die Geschwindigkeit kann aber auch unterschiedlich einstellbar sein. Der Ablauf der Funktion entspricht dem Ablauf des Pipettierens. Es werden die vorher eingegebenen Volumina in der programmierten Reihenfolge abgearbeitet. Nach Abgabe wird über die Betätigung eines Betätigungselementes, z.B. Tastendruck, entschieden, ob die nächste Probe aufgenommen werden soll oder vor der nächsten erst ein "Blowout", also ein vollständiges, sicheres Ausblasen der im Pipettierbehälter noch enthaltenen Probe mittels Überhub, und/oder ob ein Wechsel des Pipettierbehälters erfolgen soll.

Vorzugsweise betrifft ein Betriebsmodus das "Reverse Pipettieren" (rPip) von Proben. Zugeordnete Betriebsparameter sind jeweils vorzugsweise: das Volumen der Einzelprobe; die Geschwindigkeit der Aufnahme; die Geschwindigkeit der Abgabe; Aktivierung des Counters. Bei dieser Funktion "rPip" wird mehr als das zu dosierende Volumen aufgenommen. Dies wird erreicht, indem der Kolben vor der Flüssigkeitsaufnahme, nämlich durch Betätigung zweiter Art, d.h., z.B. mittels Tastendruck oder "Wippe nach unten", nach unten gefahren wird, bis in die untere Position eines Blowouts, also eines Überhubs des Kolbens, der über die Stellung des Kolbens bei einem Pipettierhub hinausgeht. Bei Start der Volumenaufnahme nimmt die Pipettiervorrichtung das Volumen des Blowout's und das eingestellte Volumen auf. Um das Spiel im Antrieb in Abgaberichtung heraus zu nehmen, vollzieht die Pipettiervorrichtung einen zusätzlichen Hub, der sofort wieder abgegeben wird. Dies ist dem Dispensieren ähnlich, erfolgt jedoch vorzugsweise unter automatischer Abgabe des Verwerfhubes mit maximaler Geschwindigkeit.

In der Ausführung des Betriebsmodus "rPip" geschieht vorzugsweise Folgendes: Erstens erfolgt eine Betätigung zweiter Art der Bedieneinrichtung: der Kolben der Pipettiervorrichtung fährt zum Blowout und bleibt in der unteren Position stehen. Zweitens erfolgt eine Betätigung erster Art der Bedieneinrichtung: Kolben fährt um die Blowout-Strecke und um den Hub für das Pipettiervolumen nach oben. Drittens erfolgt eine Betätigung zweiter Art der Bedieneinrichtung: Kolben fährt den Hub für das Pipettiervolumen nach unten und bleibt vor dem Blowout stehen. Viertens erfolgt wieder eine Betätigung zweiter Art der Bedieneinrichtung: Kolben führt den Blowout aus und bleibt in der unteren Position stehen. Alternativ zu "viertens" erfolgt eine Betätigung erster Art der Bedieneinrichtung: Kolben fährt den Pipettierhub nach oben. Der Modus "rPip" eignet sich insbesondere zum Pipettieren von Plasma, Seren und anderen Flüssigkeiten mit hohem Proteingehalt. Für wässrige Lösungen eignet sich insbesondere der Modus "Pipettieren". Der Modus "rPip" eignet sich insbesondere für netzmittelhaltige Lösungen, um die Schaumbildung bei der Abgabe in das Zielgefäß zu minimieren. Die Flüssigkeit wird insbesondere mit Überhub (Blowout-Volumen) aufgenommen. Der Überhub gehört hierbei typischer Weise nicht zum Abgabevolumen und wird vorzugsweise nicht in das Zielgefäß abgegeben. Insbesondere wenn dieselbe Probe erneut verwendet wird, kann der Überhub in der Spitze verbleiben. Wenn eine andere Flüssigkeit verwendet wird, wird vorzugsweise der Überhub und/oder vorzugsweise der Pipettierbehälter verworfen.

Durch einen Betriebsparametersatz wird vorzugsweise ein Steuerprogramm zur Durchführung des gewünschten Pipettiervorgangs gesteuert. Das Steuerprogramm kann jeweils in Form von elektrischen Schaltkreisen der Steuereinrichtung ausgebildet sein, und/oder durch einen ausführbaren Programmcode ausgebildet sein, der geeignet ist zum Steuern einer Steuereinrichtung, die programmcode-steuerbar ist und vorzugsweise programmierbar ist.

Die Pipettiervorrichtung ist vorzugsweise dazu ausgebildet, die vom Benutzer eingegebenen Parameterwerte automatisch zu überprüfen und mit einem erlaubten Bereich des jeweiligen Betriebsparameters zu vergleichen. Liegt der vom Benutzer eingegebene Parameterwert außerhalb des zulässigen Bereichs, wird die Eingabe entweder nicht akzeptiert oder auf eine Default-Wert gesetzt, der z.B. der Minimalwert oder der Maximalwert oder der zuletzt zulässig eingegebene Wert sein kann.

Vorzugsweise ist die elektrische Steuereinrichtung dazu ausgebildet, die automatische Speicherung des Parameterwertesatzes durchzuführen, nachdem der Benutzer diesen Parameterwertesatz ausgewählt hat. Vorzugsweise ist alternativ oder zusätzlich zu dieser Bedingung die elektrische Steuereinrichtung dazu ausgebildet, die automatische Speicherung des Parameterwertesatzes durchzuführen, nachdem der Pipettiervorgang zumindest einmal oder genau einmal vollständig durchgeführt wurde. Durch diese Bedingungen zur Durchführung der Historiefunktion ist insbesondere sichergestellt, dass nicht ungewollt jeder vom Benutzer geänderte Betriebsparametersatz abgespeichert wird, sondern z.B. fehlerhafte eingegebene oder verworfene Eingaben nicht bei der Definition eines historischen Parameterwertesatzes berücksichtigt werden. Dadurch wird die Verwendung der Pipettiervorrichtung mit Historiefunktion noch effizienter.

Es kann auch vorgesehen sein, dass der Benutzer das automatische Abspeichern eines Parameterwertesatzes durch einmaliges Betätigen eines Bedienelementes der Bedieneinrichtung bestätigen muss. Davon abgesehen, oder vorzugsweise ohne diese Bestätigungsmöglichkeit, erfolgt das automatische Abspeichern eines Parameterwertesatzes besonders bevorzugt ohne weiteren Einfluss des Benutzers. Durch die minimale Benutzerinteraktion wird die Verwendung der Pipettiervorrichtung mit Historiefunktion komfortabel und effizient.

Vorzugsweise ist die Pipettiervorrichtung dazu ausgebildet, dass in der Speichereinrichtung mindestens eine Sammlung einer Anzahl N1 von historischen Parameterwertesätzen gespeichert wird, die dem Benutzer jeweils bereitgestellt werden und vom Benutzer jeweils auswählbar sind. Diese Sammlung kann insbesondere als Datei oder Dateibestandteil gespeichert sein, insofern die Steuereinrichtung eine digitale Datenverarbeitungsanlage aufweist, insbesondere eine CPU und/oder eine Datenspeichereinrichtung. Diese Sammlung ist vorzugsweise einem bestimmten Betriebsmodus der Pipettiervorrichtung zugeordnet. Jeder Parametersatz der Sammlung dient vorzugsweise der Durchführung eines anderen Pipettiervorgangs in demselben Betriebsmodus. Diese Sammlung mit historischen Parameterwertesätzen kann auch als Betriebsmodus-Historie bezeichnet werden.

Vorzugsweise ist die Pipettiervorrichtung dazu ausgebildet, dass eine Anzahl N2 von Sammlungen einer Anzahl N1 von historischen Parameterwertesätzen gespeichert wird, wobei jede Sammlung von Parameterwertesätzen einem bestimmten Betriebsmodus zugeordnet ist und wobei eine Sammlung dem Benutzer jeweils bereitgestellt wird und vom Benutzer jeweils ein Parameterwertesatz aus dieser Sammlung auswählbar ist. Durch die Bereitstellung einer betriebsmodus-spezifischen Sammlung von historischen Parameterwertesätzen wird die Bedienbarkeit der Pipettiervorrichtung komfortabler und effizienter. Vorzugsweise lässt sich die Betriebsmodus-Historie eines Betriebsmodus durch eine einzige Betätigung eines Bedienelementes der Bedieneinrichtung vom Benutzer anzeigen, wenn sich die Pipettiervorrichtung in diesem Betriebsmodus befindet, um vorzugsweise nachfolgend die Auswahl durch eine weitere einzige Betätigung eines Bedienelementes der Bedieneinrichtung, insbesondere desselben Bedienelementes oder vorzugsweise eines anderen Bedienelementes, durch den Benutzer zu ermöglichen.

Es ist aber auch möglich, dass die Sammlung von Parameterwertesätzen mehr als einem einzigen Betriebsmodus zugeordnet ist, insbesondere in einer gemischten Betriebsmodus-Historie. Dadurch kann erreicht werden, dass dem Benutzer alle, zumindest eine Anzahl M von zuletzt verwendeten Pipettiervorgängen zur erneuten Auswahl in einer einzigen, gemischten Sammlung verfügbar gemacht werden.

Die Pipettiervorrichtung kann dazu ausgebildet sein, benutzerabhängige Benutzerprofile vorzusehen, wobei unter jedem Benutzerprofil die Historiefunktion benutzerabhängig angewandt und mindestens eine benutzerabhängige Betriebsmodus-Historie automatisch gespeichert wird.

Vorzugsweise ist die Pipettiervorrichtung dazu ausgebildet, dass einzelne historische Parameterwertesätze, und/oder die Anzahl N1 von historischen Parameterwertesätzen und/oder die Anzahl N2 von Sammlungen einer Anzahl N1 von historischen Parameterwertesätzen zusätzlich gespeichert werden können. Dies kann vorzugsweise jeweils benutzergesteuert erfolgen, indem dies der Benutzer festlegt oder initiiert. Dies kann aber auch semiautomatisch oder automatisch erfolgen, z.B. bei Durchführung einer vorzugsweise vorgesehenen Sicherungsfunktion, insbesondere auch als "Historien-Backup" bezeichnet. Beim Historien-Backup werden die in der Pipettiervorrichtung gespeicherten historischen Parameterwertesätze in einem Backupspeicher gespeichert, von dem aus sie optional wieder in die Pipettiervorrichtung übertragen werden können, was auch als Historien-Wiederherstellung oder "Historien-Restore" bezeichnet wird. Der Backupspeicher kann ein interner Speicher der Pipettiervorrichtung sein oder kann extern davon sein, und kann insbesondere über eine drahtgebundene oder drahtlose Datenschnittstelle verbindbar sein. Auf diese Weise lassen sich z.B. von Benutzern oder werkseitig erstellte "historische" Parameterwertesätze oder deren Sammlungen zur Verfügung stellen, um diese nachträglich auf die Pipettiervorrichtung eines Benutzers zu übertragen. Der Benutzer kann dann unmittelbar von historischen Daten anderer Benutzer oder des Werks profitieren, ohne diese Funktionen selber erstellt zu haben. Eine solche Funktion ist insbesondere bei Pipettiervorgängen vorteilhaft, bei denen ein Betriebsmodus von vielen Benutzern in gleicher Weise benutzt wird, z.B. bei einem standardmäßigen Vorgehen.

Vorzugsweise ist die Pipettiervorrichtung dazu ausgebildet, dass mindestens ein einzelner (oder mehrere oder jeder) Parameter einzelner historischer Parameterwertesätze, und/oder die Anzahl N1 von historischen Parameterwertesätzen und/oder die Anzahl N2 von Sammlungen einer Anzahl N1 von historischen Parameterwertesätzen vom Benutzer geändert werden kann und insbesondere die so geänderten Daten automatisch oder auf Veranlassung des Benutzers gespeichert werden können, oder aber auch nicht gespeichert werden. Dadurch können historische Parameterwertesätze flexibler genutzt werden. Nach Änderung eines Parameters eines historischen Parameterwertesatzes wird, falls eine Sammlung von N1 historischen Parameterwertesätzen dieses Betriebsmodus vorliegt, die Reihenfolge vorzugsweise geändert, in der insbesondere diese Anzahl N1 der historischen Parameterwertesätze einer Sammlung dem Benutzer angezeigt und zur Auswahl zur Verfügung gestellt werden. Der zuletzt geänderte historische Parameterwertesatz wird vorzugsweise an den Anfang der Sammlung von N1 Parameterwertesätzen gestellt, und vorzugsweise wird der älteste Parameterwertesatz aus der Sammlung verworfen.

Vorzugsweise weist die Pipettiervorrichtung eine Anzeigeeinrichtung auf, auf der die jeweilige Sammlung von historischen Parameterwertesätzen dem Benutzer angezeigt werden kann, und wobei eine Sammlung von historischen Parameterwertesätzen dem Benutzer jeweils auf Anforderung durch den Benutzer als Übersicht, insbesondere als Liste, angezeigt wird (diese Funktion wird bezeichnet als "Anzeige historischer Parameterwertesätze"), insbesondere durch Betätigen eines Bedienelementes der Bedieneinrichtung angezeigt wird, und wobei die Pipettiervorrichtung vorzugsweise dazu ausgebildet ist, dass der Benutzer aus dieser Liste den gewünschten Parameterwertesatz auswählen kann und diesen vorzugsweise mit einer einzigen Betätigung der Bedieneinrichtung als Betriebsparametersatz setzen kann, der den durchzuführenden Pipettiervorgang steuert.

Die Anzeigeneinrichtung ist vorzugsweise ein Bildschirm, vorzugsweise ein Farbdisplay. Der Bildschirm kann eine Eingabe-Funktionalität aufweisen, insbesondere kann er ein Touchscreen sein.

Vorzugsweise weist die Bedieneinrichtung mindestens ein Bedienelement mit variabler Funktion auf, das auch als Softkey bezeichnet wird. Ein Bedienelement, insbesondere der Softkey, kann insbesondere ein programmierbares Bedienelement sein, dessen Funktion insbesondere vom Benutzer programmierbar ist. Vorzugsweise weist der Softkey eine Betriebsmodus-spezifische Funktion auf, die von dem eingestellten Betriebsmodus der Pipettiervorrichtung abhängt.

Vorzugsweise weist die Pipettiervorrichtung eine Anzeigeeinrichtung auf und eine Mehrzahl von zumindest teilweise vordefinierten und in der Pipettiervorrichtung gespeicherten Anzeigeseiten, die in der Anzeigeeinrichtung vorzugsweise bildschirmfüllend angezeigt werden können, wobei das Bedienelement mit variabler Funktion in Abhängigkeit von der angezeigten Anzeigenseite jeweils eine vorbestimmte Funktion aufweist, die auf der Anzeigenseite vorzugsweise an einer vorbestimmten Position bezeichnet und angezeigt ist. Diese Funktion ist - vorzugsweise in mindestens einem, vorzugsweise in jedem Betriebsmodus der Pipettiervorrichtung und/oder auf mindestens einer Anzeigeseite der Anzeigeeinrichtung - die vorgenannte Funktion der Anzeige historischer Parameterwertesätze in der Anzeigeeinrichtung. Auf diese Weise ist die Historiefunktion für den Benutzer einfach zugänglich.

Vorzugsweise ist/sind die Pipettiervorrichtung und/oder die Steuereinrichtung dazu ausgebildet, dass die Funktion des automatischen Speicherns des historischen Parameterwertesatzes vom Benutzer wahlweise aktivierbar und/oder deaktivierbar ist.

Vorzugsweise ist der Softkey, vorzugsweise das mindestens eine programmierbare Bedienelement, vom Benutzer so programmierbar, dass durch seine Betätigung wahlweise dem Benutzer eine Sammlung von historischen Parameterwertesätzen angezeigt werden kann oder dem Benutzer mindestens eine andere Information angezeigt werden kann, insbesondere eine Hilfe zur Erläuterung der Betriebsparameter eines Betriebsmodus. Dadurch kann der Benutzer selber wählen, ob er die Pipettiervorrichtung für den schnellen Zugriff auf die Historiefunktion über diesen Softkey bzw. das programmierbare Bedienelement einrichten möchte oder ob er eine andere Funktion damit verknüpfen möchte. Vorzugsweise ist die Historiefunktion nicht zugänglich, wenn sie zuvor vom Benutzer deaktiviert wurde. Vorzugsweise ist die Historiefunktion zugänglich, wenn sie zuvor vom Benutzer aktiviert wurde.

Vorzugsweise weist die Pipettiervorrichtung eine Anzeigeneinrichtung und eine Zeiterfassungseinrichtung auf, wobei die Anzahl N1 der Parameterwertesätze chronologisch sortiert ist und insbesondere chronologisch sortiert anzeigbar ist, wobei insbesondere der zuletzt gespeicherte historische Parameterwertesatz in einer Liste an erster, insbesondere oberster Stelle anzeigbar ist. Die Zeiterfassungseinrichtung kann einen Schwingquarz aufweisen. Vorzugsweise ist die Speichereinrichtung als FIFO-Speicher (First in, First out) ausgeführt, so dass die zuerst eingetragenen Daten auch zuerst wieder verworfen, insbesondere überschrieben werden. Die Zeiterfassungseinrichtung kann insbesondere Bestandteil der Steuereinrichtung sein.

Vorzugsweise weist die Pipettiervorrichtung eine Zählereinrichtung auf, mit der eine Anzahl wiederkehrender Vorgänge, z.B. die wiederholte Abgabe einer Probe, das wiederkehrende Ansaugen einer Probe oder die wiederkehrende Verwendung eines Betriebsmodus gezählt werden können. Die Zählereinrichtung wird auch als Counter bezeichnet.

Vorzugsweise weist die Pipettiervorrichtung eine Anzeigeneinrichtung und eine Zähleinrichtung auf, wobei die Zähleinrichtung die Anzahl N3 der Verwendungen eines bestimmten historischen Parameterwertesatzes jeweils zählt und in einer Speichereinrichtung der Pipettiervorrichtung speichert, wobei die Anzahl N1 der Parameterwertesätze gemäß der Anzahl N3 sortiert ist und insbesondere derartig sortiert anzeigbar ist, wobei insbesondere der historische Parameterwertesatz mit der höchsten Häufigkeit N3 der Verwendung in einer Liste an erster, insbesondere oberster Stelle angezeigt wird. Die Zähleinrichtung kann durch einen Programmcode realisiert sein und/oder elektrische Schaltkreise zur Realisierung eines Zählers aufweisen. Die Zähleinrichtung kann insbesondere Bestandteil der Steuereinrichtung sein.

Das erfindungsgemäße Verfahren zum Betreiben einer elektrischen Pipettiervorrichtung, insbesondere der erfindungsgemäßen Pipettiervorrichtung, zum Steuern eines Pipettiervorgangs an mindestens einer fluiden Laborprobe gemäß mindestens eines Betriebsmodus der Pipettiervorrichtung, die eine elektrische Steuereinrichtung und eine Bedieneinrichtung aufweist, weist vorzugsweise die Schritte auf:
- Festlegen eines Betriebsparametersatzes durch den Benutzer der Pipettiervorrichtung, wobei der Betriebsparametersatz einem Betriebsmodus zugeordnet ist und jeweils mindestens einen Betriebsparameter umfasst, wobei der Benutzer zum Festlegen des Betriebsparameters den gewünschten Wert des Betriebsparameters als Parameterwert auswählt und auf diese Weise einen Parameterwertesatz mit mindestens einem Parameterwert bestimmt;
- automatisches Speichern des mindestens einen vom Benutzer bestimmten Parameterwertesatzes, der dem Betriebsparametersatz eines Betriebsmodus zugeordnet ist, als der mindestens eine historische Parameterwertesatz dieses Betriebsmodus, in einer elektrischen Speichereinrichtung der Pipettiervorrichtung;
- nach einer Änderung des Betriebsparametersatzes dieses Betriebsmodus: erneutes Bereitstellen des mindestens einen automatisch gespeicherten historischen Parameterwertesatz dieses Betriebsmodus zur nachfolgenden Steuerung des mindestens einen, gleichen Pipettiervorgangs.

Weitere bevorzugte Ausgestaltungen des erfindungsgemäßen Verfahrens ergeben sich aus der Beschreibung der Pipettiervorrichtung und deren bevorzugten Ausgestaltungen.

Weitere bevorzugte Ausgestaltungen der erfindungsgemäßen Pipettiervorrichtung und des erfindungsgemäßen Verfahrens ergeben sich ferner aus der nachfolgenden Beschreibung der Ausführungsbeispiele in Zusammenhang mit den Figuren und deren Beschreibung. Gleiche Bauteile der Ausführungsbeispiele werden im Wesentlichen durch gleiche Bezugszeichen gekennzeichnet, falls dies nicht anders beschrieben wird oder sich nicht anders aus dem Kontext ergibt. Es zeigen:
Fig. 1 zeigt in einer Perspektivansicht ein erstes Ausführungsbeispiel der erfindungsgemäßen Pipettiervorrichtung.
Fig. 2a zeigt schematisch einen Speicherbereich der Speichereinrichtung der Pipettiervorrichtung aus Fig. 1, in einem ersten Zustand und einem zweiten Zustand.
Fig. 2b zeigt schematisch einen Speicherbereich der Speichereinrichtung der Pipettiervorrichtung aus Fig. 1, in einem dritten Zustand und einem vierten Zustand.
Fig. 3a zeigt eine Anzeigenseite von mehreren möglichen Anzeigenseiten, die auf dem Display der Pipettiervorrichtung aus Fig. 1 angezeigt werden, nämlich die Anzeigenseite "Option-Historie", wobei die Historiefunktion ausgeschaltet ist.
Fig. 3b zeigt die Anzeigenseite "Option-Historie" der Fig. 3a, wobei die Historiefunktion eingeschaltet ist.
Fig. 4a zeigt eine Anzeigenseite, die auf dem Display der Pipettiervorrichtung aus Fig. 1 angezeigt wird, wenn der Betriebsmodus "Pipettieren" der Pipettiervorrichtung eingestellt ist und die Historiefunktion deaktiviert ist.
Fig. 4b zeigt eine Anzeigenseite, die auf dem Display der Pipettiervorrichtung aus Fig. 1 angezeigt wird, wenn der Betriebsmodus "Pipettieren" der Pipettiervorrichtung eingestellt ist und die Historiefunktion aktiviert ist.
Fig. 4c zeigt eine Anzeigenseite der Betriebsmodus-Historie des Betriebsmodus "Pipettieren", die auf dem Display der Pipettiervorrichtung aus Fig. 1 angezeigt wird, wenn der Betriebsmodus "Pipettieren" der Pipettiervorrichtung eingestellt ist und die Betriebsmodus-Historie vom Benutzer aufgerufen wurde.
Fig. 5a zeigt eine Anzeigenseite von mehreren möglichen Anzeigenseiten, die auf dem Display der Pipettiervorrichtung aus Fig. 1 angezeigt werden, nämlich die Anzeigenseite "Special", wobei die Historiefunktion ausgeschaltet ist.
Fig. 5b zeigt die Anzeigenseite "Special" der Fig. 5a, wobei die Historiefunktion eingeschaltet ist.
Fig. 5c zeigt eine Anzeigenseite der Betriebsmodus-Historie des Betriebsmodus "Seq. dispensieren", die auf dem Display der Pipettiervorrichtung aus Fig. 1 angezeigt wird, wenn der Betriebsmodus "Seq. dispensieren" der Pipettiervorrichtung eingestellt ist und die Betriebsmodus-Historie vom Benutzer aufgerufen wurde.

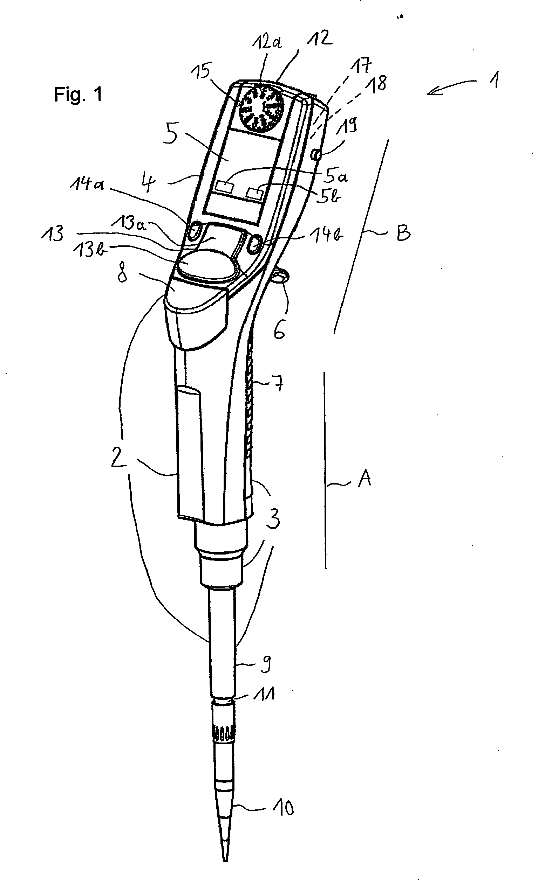

Fig. 1 zeigt in einer Perspektivansicht die Pipettiervorrichtung 1, eine elektrische Pipette 1. Bei der elektrischen Pipette 1 wird der Hub des Kolbens elektrisch angetrieben. Die Ansteuerung des Hubs in den verschiedenen Betriebsmodi der Pipette erfolgt elektrisch gesteuert durch eine elektrische Steuereinrichtung 17 mit angeschlossener Speichereinrichtung 18, hier ein FLASH-Speicher, im Inneren der Pipette 1. Der FLASH-Speicher erlaubt mindestens 150000 Schreibzyklen, so dass die Historiefunktion der Pipette über deren mehrjährige Lebensdauer besonders zuverlässig durchführbar ist.

Die Betriebsparameter und sonstigen Einstellungen der Pipette lassen sich vom Benutzer über die Bedieneinrichtung und das Display der Pipette kontrollieren. In der Pipette sind mehrere, elektrisch gesteuerte Pipettierprogramme gespeichert, wobei vorzugsweise jedem Betriebsmodus ein Pipettierprogramm zugeordnet ist. Ein Pipettierprogramm lässt sich durch einen Betriebsparametersatz eindeutig festlegen. Einmal festgelegt, lässt sich das Pipettierprogramm vom Benutzer auslösen und wird von der Pipettiervorrichtung automatisch gestartet.

Die Pipette 1 weist einen Grundkörper 2 auf, der einen unteren Schaftabschnitt 3 aufweist und einen oberen Abschnitt 4, der insbesondere das Display 5 und Bedienelemente aufweist. Der Schaftabschnitt 3 erstreckt sich parallel der Längsachse A der Pipettiervorrichtung, während der obere Abschnitt 4 gegenüber der Achse A geneigt angeordnet ist und sich parallel der Achse B erstreckt. Durch die geneigte Anordnung des oberen Abschnitts 4 lässt sich das Display 5 besonders ergonomisch verwenden.

Die Pipette 1 weist einen Griffbereich 7 mit der Haltelasche 6 auf, die sich bei bestimmungsgemäßem Halten der Pipette 1 durch den Benutzer auf dem Zeigefinger des Benutzers abstützt, während der Griffbereich 7 in der Handfläche des Benutzers liegt. Mit dem Daumen erreichbar ist insbesondere der Abwurfknopf 8, durch dessen Drücken entlang der Achse A nach unten die gefedert gelagerte Abwurfhülse 9 nach unten bewegt wird und die Pipettenspitze 10 vom Verbindungskonus 11 der Pipettiervorrichtung abwirft, auf dem sie aufgesteckt ist. Der Abwurfmechanismus kann aber auch elektronisch getrieben sein. Die Pipette 1 weist an den Seitenflächen des oberen Abschnitts 4 jeweils einen metallischen Kontaktvorsprung 19 auf, der dem Aufladen des integrierten Akkumulators dient, der den Energiespeicher der elektrischen Pipette bildet.

Die Bedieneinrichtung (12; 13; 14a; 14b) weist ein Wahlrad 12 auf, eine Wippe 13 und einen ersten Bedienknopf 14a und einen zweiten Bedienknopf 14b.

Das scheibenartige Wahlrad 12 ist drehbar am Grundkörper 2, insbesondere parallel der im Wesentlichen planaren Vorderseite des oberen Abschnitts 4 gelagert. Es ist eine Einrichtung zur Erkennung der Stellung des Wahlrads 12 vorgesehen, die vorliegend einen Hallsensor aufweist, mit dem die relative Stellung des Wahlrads 12 bezüglich des Grundkörpers berührungslos gemessen wird. Das Wahlrad 12 weist eine Anzahl von Arretierungen auf, die der Anzahl von einstellbaren Positionen des Wahlrads entsprechen. Insbesondere ist die Arretierung derart, dass eine Markierung 12a zur Bezeichnung der eingestellten Position des Wahlrads 12 an der Markierung 15 ausgerichtet werden kann, die fest am Grundkörper 2 auf der Vorderseite des oberen Abschnitts 4 angeordnet ist.

Das Farbdisplay 5 dient als zentrales Informationselement für den Benutzer. Dort werden insbesondere die verschiedenen Betriebsmodi der Pipette 1 angezeigt und die Parameterwerte der Betriebsparameter angezeigt. In den zwei Bereichen 5a und 5b wird jeweils eine Information angezeigt, die in den Benutzer mitteilt, welche Funktion auf der gerade angezeigten Anzeigeseite mit dem ersten Bedienknopf 14a bzw. dem zweiten Bedienknopf 14b verknüpft ist, falls auch in der jeweiligen Anzeigeseite eine Funktion damit verknüpft ist. Jeder der Bedienknöpfe ist somit als Bedienelement mit variabler Funktion ausgebildet und wird in Kombination mit seiner angezeigten Funktion als "Softkey" bezeichnet. Dies wird unten noch erläutert.

Vorzugsweise ist die Pipettiervorrichtung dazu ausgebildet, zwischen den verschiedenen Funktionen eines Softkeys zu wechseln, wenn ein bestimmter Betriebsmodus der Pipettiervorrichtung eingestellt ist. Dies kann zum Beispiel durch einen Doppelklick des Softkeys oder ein längeres Drücken des Softkeys für einen Mindestzeitraum, von zum Beispiel 2 Sekunden, erreicht werden.

Vorzugsweise ist für jeden Betriebsmodus der Pipette 1 eine Anzeigenseite, die auf dem Display dargestellt wird, mit Betriebsmodus-spezifischem Layout vorgesehen. Falls einstellbare Betriebsparameter oder sonstige änderbare Einträge auf der Anzeigenseite vorgesehen sind, lassen sich diese über die Bedienwippe 13 markieren und insbesondere mit dem Bedienknopf 14a auswählen, wobei in diesem Fall der Bedienknopf 14a die Funktion "Auswahl" hat und im Display an der Position 5a der Text "Wählen" angezeigt wird. Das Ändern der Parameterwerte eines Betriebsparameters oder das Ändern einer Auswahl oder eines Eintrags erfolgt durch Betätigung der Wippe 13.

Die Wippe 13 ist um eine senkrecht zur Längsachse A angeordnete Schwenkachse schwenkbar am Grundkörper angeordnet. Drückt der Benutzer den oberen Bereich 13a, so wird eine erste Funktion der Wippe 13 aktiviert, drückt der Benutzer den unteren Bereich 13b, so wird eine zweite Funktion der Wippe 13 aktiviert. Die Wippe ist so gelagert, dass keine Funktion ausgelöst wird, wenn sie nicht betätigt wird. Die Wippe 13 dient insbesondere in einem manuellen Betriebsmodus der Pipette zum Ansaugen der zu pipettierenden Probe in die Pipettenspitze 10, solange der obere Bereich 13a vom Benutzer gedrückt wird und dient ferner den Abgeben der Probe aus der Pipettenspitze 10, solange der untere Bereich 13b vom Benutzer gedrückt wird.

Die Pipette 1 kann in verschiedenen Betriebsmodi betrieben werden, die im Einzelnen zuvor bereits erläutert wurden. Eine erste Anzahl von Betriebsmodi ist direkt über das Wahlrad 12 einstellbar, eine zweite Anzahl von Betriebsmodi ist über eine Anzeigeseite, die mit "Special" bzw. "Spc" bezeichnet wird, mit mehreren auswählbaren Einträgen einstellbar, wobei ein Eintrag jeweils einen Betriebsmodus beschreibt.

Die Pipette 1 weist eine vom Benutzer aktivierbare Historiefunktion auf. Dies bedeutet, dass bei aktivierter Historiefunktion von der Pipette für jeden Betriebsmodus eine Betriebsmodus-spezifische Betriebsmodus-Historie angelegt wird. Über den entsprechenden Softkey, hier 14b/5b, ist die Betriebsmodus-Historie in der Regel vom Benutzer aufrufbar, wenn die Betriebsmodus-spezifische Anzeigenseite angezeigt wird.

Die Pipette 1 weist eine Speichereinrichtung auf, in der geeignete Speicherbereiche für die Betriebsmodus-Historien vorgesehen sind.

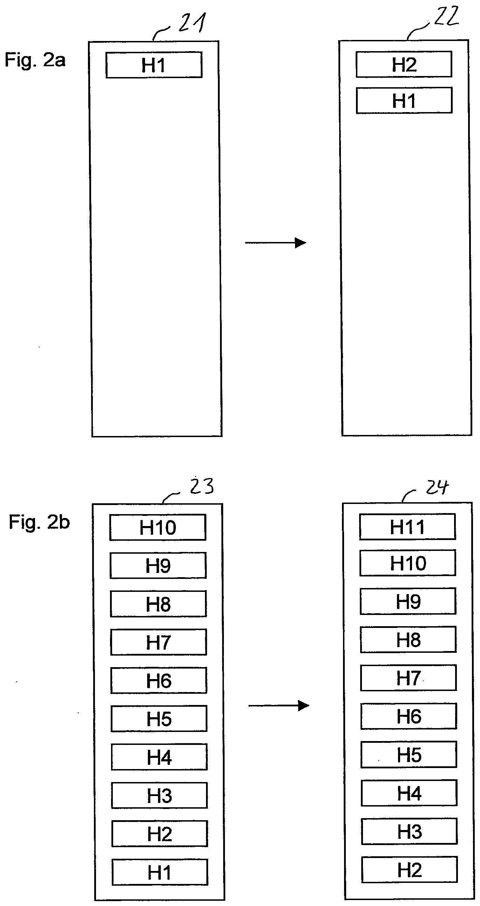

Fig. 2a zeigt schematisch einen Speicherbereich der Speichereinrichtung 18 der Pipettiervorrichtung aus Fig. 1, in einem ersten Zustand und einem zweiten Zustand. Ein Speicherbereich ist dazu geeignet, eine geräteseitig festgelegte maximale Anzahl Nmax=10 von Einträgen zu speichern, wobei ein Eintrag einem Parameterwertesatz entsprechend dem Betriebsparametersatz eines Betriebsmodus entspricht. Fig. 2a bezieht sich auf den Fall, dass der Speicherbereich noch nicht maximal gefüllt ist, da die Anzahl der maximal möglichen Einträge in den Speicherbereich noch nicht erreicht wurde. Dies ist zum Beispiel immer in dem Zeitraum der Fall, indem die Pipette erstmalig verwendet wird. Das Feld 21 repräsentiert den Speicherbereich im ersten Zustand, das Feld 22 repräsentiert den Speicherbereich im zweiten Zustand.

Die Pipette 1 speichert automatisch einen Parameterwertesatz ab, wenn dieser vom Benutzer durch die entsprechenden Einstellungen auf der Anzeigenseite des Betriebsmodus festgelegt wurde (1. Bedingung) und wenn danach vom Benutzer der Pipettiervorgang mit diesem Parameterwertesatz vollständig durchgeführt wurde (2. Bedingung). Falls eine der beiden Bedingungen nicht erfüllt ist, erfolgt kein Eintrag des vom Benutzer festgelegten Parameterwertesatzes in der Betriebsmodus-Historie.

Im ersten Zustand 21 der Fig. 2a ist genau ein Eintrag "H1" in der Betriebsmodus-Historie im Speicherbereich vorhanden. Im zweiten Zustand 22 der Fig. 2a sind genau zwei Einträge "H2" und "H1" in der Betriebsmodus-Historie im Speicherbereich vorhanden. Der Eintrag H1 repräsentiert einen ersten Parameterwertesatz dieses Betriebsmodus, der Eintrag H2 repräsentiert einen zweiten Parameterwertesatz dieses Betriebsmodus, wobei H1 und H2 sich in zumindest einem Parameterwert, also in mindestens einem Betriebsparameter unterscheiden. Die Einträge der Betriebsmodus-Historie sind chronologisch sortiert angeordnet, wobei der jüngste Eintrag ganz oben angezeigt wird. Erfolgt ein neuer Eintrag, so rücken die bisherigen Einträge automatisch jeweils eine Stufe nach unten. Ist die maximale Anzahl der Einträge erreicht, so funktioniert der Speicherbereich vorzugsweise wie ein FIFO-Speicher: der älteste Eintrag wird aus der Liste gelöscht und der neue Eintrag belegt die erste Stelle, während die anderen neun Einträge automatisch eine Stufe nach unten rücken. Dieser Fall ist in Fig. 2b gezeigt.

Fig. 2b zeigt schematisch einen Speicherbereich der Speichereinrichtung der Pipettiervorrichtung aus Fig. 1, in einem dritten Zustand und einem vierten Zustand. Im dritten Zustand 23 ist der Speicherbereich vollständig mit Einträgen gefüllt, wobei H10 der jüngste Eintrag ist und H1 der älteste Eintrag ist. Wird ein neuer Eintrag automatisch eingetragen, so wird automatisch der älteste Eintrag H1 gelöscht, der neue Eintrag belegt die erste Stelle und die bisherigen Einträge H9 bis H2 rücken automatisch eine Stufe nach unten. Hier nicht der Fall, aber vorzugsweise vorgesehen, ist die Liste der Betriebsmodus-Historie zumindest teilweise nach der Häufigkeit der Verwendung, also der Anzahl der Durchführungen eines Pipettiervorgangs mit dem Parameterwertesatz, eines bestimmten Eintrags sortiert. Diese Häufigkeit kann sich insbesondere auf einen limitierten Zeitraum der Benutzung der Pipettiervorrichtung beziehen oder auf den gesamten Zeitraum der Benutzung der Pipettiervorrichtung.

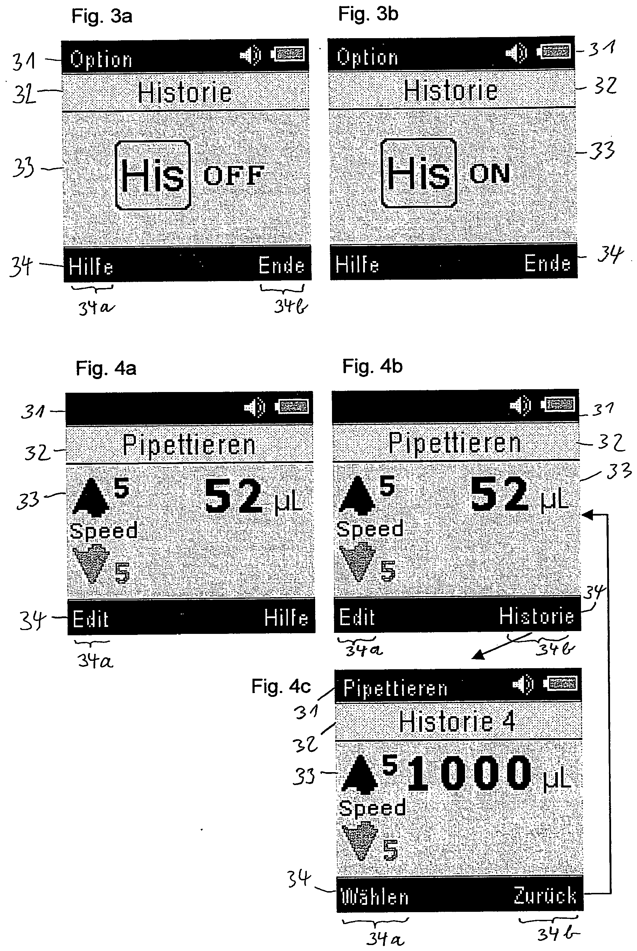

Fig. 3a zeigt eine Anzeigenseite von mehreren möglichen Anzeigenseiten, die auf dem Display der Pipettiervorrichtung aus Fig. 1 angezeigt werden, nämlich die Anzeigenseite "Option-Historie", wobei die Historiefunktion ausgeschaltet ist. Die gezeigte Anzeigeseite "Option-Historie" ist über das Wahlrad 12 und die Stellung "Opt" und anschließender Auswahl aus einer Optionsliste über die Wippe 13 und Betätigung des mit "Wählen" belegten Bedienknopfs 14a erreichbar. Die Anzeigeseite weist einen oberen ersten Titelbalken 31 auf, einen oberen zweiten Titelbalken 32, ein größeres, zentrales Informationsfeld 33 und einen unteren Balken 34, der insbesondere die Funktionen 34a und 34b nennt, mit denen die beiden Softkeys 14a und 14b gemäß dieser Anzeigeseite aktuell belegt sind. Im oberen Titelbalken 31 wird z.B. angezeigt, ob - und/oder mit welcher Lautstärke - der integrierte Lautsprecher der Pipette, der insbesondere zur Ausgabe von Warnsignalen und anderen Signalen an den Benutzer dient, in Betrieb ist. Im oberen Titelbalken 31 ist ferner der Batterieladezustand angezeigt.

Wenn diese Anzeigeseite "Option-Historie" im Display 5 angezeigt wird, so wird der Text "Hilfe" im Bereich 5a des Displays 5 gezeigt und der Text "Ende" im Bereich 5b des Displays 5 gezeigt. Über die Betätigung der Wippe 13 kann der Benutzer zwischen einem ersten Zustand der Pipette, indem in die Historiefunktion deaktiviert ("His off' ; Fig. 3a) ist und einem zweiten Zustand der Pipette wechseln, in dem die Historiefunktion aktiviert ist ("His on"; Fig. 3b). Durch Betätigung des Softkeys 14b mit der aktuellen Funktion "Ende" kommt der Benutzer zurück auf die Anzeigeseite (hier nicht gezeigt) des Optionsmenüs.

Hat der Benutzer die Historiefunktion der Pipette 1 auf diese Weise aktiviert, so hat er auf diese Weise gleichzeitig die Funktion des Softkeys 14b in der Weise programmiert, dass auf der Betriebsmodus-spezifischen Anzeigenseite jeweils der Eintrag 34b "Historie" vorgesehen ist, so dass der Benutzer ausgehend von dieser Anzeigenseite über den Softkey 14b jeweils die entsprechende, Betriebsmodus-spezifische Anzeigenseite der Betriebsmodus-Historie erreicht. Falls die Historiefunktion deaktiviert ist, ist der Softkey 14b auf der Betriebsmodus-spezifischen Anzeigenseite vorzugsweise standardmäßig mit der Funktion "Hilfe" belegt, über die der Benutzer jeweils eine Anzeigenseite mit Erläuterungen der Betriebsparameter des entsprechenden Betriebsmodus erhält. In diesem Sinne ist der Softkey 14a und 14b jeweils ein vom Benutzer programmierbares Bedienelement.

Fig. 4a zeigt eine Betriebsmodus-spezifische Anzeigenseite, die auf dem Display der Pipettiervorrichtung aus Fig. 1 angezeigt wird, wenn der Betriebsmodus "Pipettieren" der Pipettiervorrichtung eingestellt ist und die Historiefunktion deaktiviert ist. Die Funktion des Softkeys 14a ist "Edit", wodurch die einstellbaren Felder in der Anzeigenseite anwählbar werden (optionale "Wählen"-Funktion des Softkeys 14a) und über die Wippe 13 verstellbar werden.

Fig. 4b zeigt eine Betriebsmodus-spezifische Anzeigenseite, die auf dem Display der Pipettiervorrichtung aus Fig. 1 angezeigt wird, wenn der Betriebsmodus "Pipettieren" der Pipettiervorrichtung eingestellt ist und die Historiefunktion aktiviert ist.

Fig. 4c zeigt eine Betriebsmodus-spezifische Anzeigenseite der Betriebsmodus-Historie des Betriebsmodus "Pipettieren", die auf dem Display der Pipettiervorrichtung aus Fig. 1 angezeigt wird, wenn der Betriebsmodus "Pipettieren" der Pipettiervorrichtung eingestellt ist und die Betriebsmodus-Historie vom Benutzer aufgerufen wurde, was durch einen Pfeil von Fig. 4b nach Fig. 4c symbolisiert wird. In dem oberen zweiten Titelbalken 32 wird die Information "Historie 4" angezeigt, die den Eintrag der Betriebsmodus-Historie repräsentiert, der in der Liste von oben gezählt an vierter Stelle steht, also der viertjüngste Eintrag der Betriebsmodus-Historie. Betätigen der Wippe 13 auf dieser Anzeigenseite wechselt schrittweise zwischen den hier maximal zehn Einträgen der Betriebsmodus-Historie. Durch Betätigen des Softkeys 14a wird der entsprechende Parameterwertersatz ausgewählt und es wird wieder zu der Betriebsmodus-spezifischen Anzeigenseite (analog zu Fig. 4b) zurück gewechselt, die dann aber die Parameterwerte des entsprechenden Parameterwertersatzes zeigt. Der darauf folgende Pipettiervorgang verwendet nun diesen Parameterwertersatz.

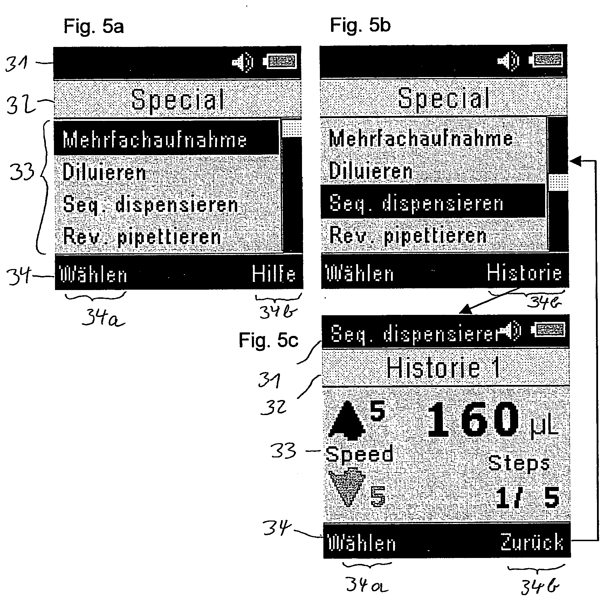

Fig. 5a zeigt eine Betriebsmodus-spezifische Anzeigenseite von mehreren möglichen Anzeigenseiten, die auf dem Display der Pipettiervorrichtung aus Fig. 1 angezeigt werden, nämlich die Anzeigenseite "Special", wobei die Historiefunktion ausgeschaltet ist. Über diese Anzeigenseite kann eine zweite Anzahl von Betriebsmodi ausgewählt werden. Insbesondere kann auf dieser Anzeigenseite direkt die jeweils einem Betriebsmodus zugeordnete Betriebsmodus-Historie mit dem Softkey 14b "Historie" aufgerufen werden, falls die Historiefunktion aktiviert ist. Andernfalls wird im unteren Balken 34 an der Stelle 34b die Hilfefunktion angeboten, über die der Benutzer Erläuterungen zu den Betriebsparametern des ausgewählten Betriebsmodus erhält.

Fig. 5b zeigt die Anzeigenseite "Special" der Fig. 5a, wobei die Historiefunktion eingeschaltet ist.

Fig. 5c zeigt eine Betriebsmodus-spezifische Anzeigenseite der Betriebsmodus-Historie des Betriebsmodus "Seq. dispensieren", die auf dem Display der Pipettiervorrichtung aus Fig. 1 angezeigt wird, wenn der Betriebsmodus "Seq. dispensieren" der Pipettiervorrichtung eingestellt ist und die Betriebsmodus-Historie vom Benutzer aufgerufen wurde. In dem oberen zweiten Titelbalken 32 wird die Information "Historie 1" angezeigt, die den Eintrag der Betriebsmodus-Historie repräsentiert, der in der Liste von oben gezählt an erster Stelle steht, also der jüngste Eintrag der Betriebsmodus-Historie. Betätigen der Wippe 13 auf dieser Anzeigenseite wechselt schrittweise zwischen den hier maximal zehn Einträgen der Betriebsmodus-Historie. Durch Betätigen des Softkeys 14a wird der entsprechende Parameterwertersatz ausgewählt und es wird wieder zu der Betriebsmodus-spezifischen Anzeigenseite (analog zu Fig. 5b) zurück gewechselt, die dann aber die Parameterwerte des entsprechenden Parameterwertersatzes zeigt. Der darauf folgende Pipettiervorgang verwendet nun diesen Parameterwertersatz.

Durch die Möglichkeit der Historiefunktion werden dem Benutzer in komfortabler Weise automatisch die zuvor benutzten Parameterwertesätze zur Verfügung gestellt. Ein gewünschter Pipettiervorgang, der einem Pipettierprogramm gemäß dem auf diese Weise festgelegten Betriebsparametersatz folgt, lässt sich so komfortabel auswählen. So erspart sich der Benutzer insbesondere zahlreiche Editierschritte, die insbesondere erforderlich sind, wenn er sich durch Programmieren ein individuelles Pipettierprogramm erstellt, benennt und abspeichert. Diese Möglichkeit ist bei der Pipettte 1 zusätzlich und unabhängig von der Historiefunktion vorgesehen. Ferner besteht für den Benutzer vorzugsweise auch die Möglichkeit, nach Auswahl und Einstellen eines bestimmten Parameterwertesatzes für den Betriebsparametersatz nach Wunsch die einzelnen Parameter zu ändern. Sobald das Pipettierprogramm gemäß dem so geänderten historischen Parameterwertesatz einmal durchgeführt wurde, wird der so geänderte historische Parameterwertesatz als neuer historischer Parameterwertesatz gespeichert.

## Patentansprüche

1. Pipettiervorrichtung (1), zur Durchführung eines zumindest teilweise elektrisch gesteuerten Pipettiervorgangs an mindestens einer fluiden Laborprobe gemäß mindestens eines Betriebsmodus der Pipettiervorrichtung, aufweisend
- eine elektrische Steuereinrichtung (17) zum Steuern des Pipettiervorgangs, der durch einen vom Benutzer festlegbaren Betriebsparametersatz steuerbar ist, der zum Steuern des Pipettiervorgangs dient, der einem Betriebsmodus zugeordnet ist und der jeweils mindestens einen Betriebsparameter umfasst, der ein während eines Ansaugschrittes des Pipettiervorgangs anzusaugendes Ansaugvolumen definiert und/oder ein während eines Abgabeschrittes abzugebendes Abgabevolumen definiert, wobei der Benutzer zum Festlegen des Betriebsparameters den gewünschten Wert des Betriebsparameters als Parameterwert auswählt und auf diese Weise einen Parameterwertesatz mit mindestens einem Parameterwert bestimmt,
- mindestens eine Bedieneinrichtung (12, 13, 14a, 14b) zum Festlegen des Betriebsparametersatzes durch den Benutzer,
- eine elektrische Speichereinrichtung (18) zum Speichern des mindestens einen Parameterwertesatzes,
**dadurch gekennzeichnet dass**
die elektrische Steuereinrichtung (17) dazu ausgebildet ist, den mindestens einen vom Benutzer bestimmten Parameterwertesatz automatisch als den mindestens einen historischen Parameterwertesatz dieses Betriebsmodus in der Speichereinrichtung (18) zu speichern,
wobei die elektrische Steuereinrichtung dazu ausgebildet ist, die automatische Speicherung des Parameterwertesatzes ohne weiteren Einfluss des Benutzers durchzuführen, nachdem der Benutzer diesen Parameterwertesatz mittels der mindestens einen Bedieneinrichtung (12, 13, 14a, 14b) ausgewählt hat, und
wobei die elektrische Steuereinrichtung dazu ausgebildet ist, nach einer Änderung des Betriebsparametersatzes dieses Betriebsmodus den mindestens einen automatisch gespeicherten historischen Parameterwertesatz dieses Betriebsmodus zur nachfolgenden Steuerung des mindestens einen, gleichen Pipettiervorgangs erneut bereitzustellen.

2. Pipettiervorrichtung nach Anspruch 1, wobei die elektrische Steuereinrichtung dazu ausgebildet ist, die automatische Speicherung des Parameterwertesatzes durchzuführen, nachdem der Pipettiervorgang zumindest einmal vollständig durchgeführt wurde.

3. Pipettiervorrichtung gemäß mindestens einem der vorherigen Ansprüche, wobei in der Speichereinrichtung mindestens eine Sammlung (Betriebsparameter-Einstellungs-Historie) einer Anzahl N1 von historischen Parameterwertesätzen gespeichert wird, die dem Benutzer jeweils bereitgestellt werden und vom Benutzer jeweils auswählbar sind.

4. Pipettiervorrichtung nach Anspruch 3, wobei die Pipettiervorrichtung dazu ausgebildet ist, dass eine Anzahl N2 von Sammlungen einer Anzahl N1 von historischen Parameterwertesätzen gespeichert wird, wobei jede Sammlung von Parameterwertesätzen einem bestimmten Betriebsmodus zugeordnet ist und wobei eine Sammlung dem Benutzer jeweils bereitgestellt wird und vom Benutzer jeweils ein Parameterwertesatz aus dieser Sammlung auswählbar ist.

5. Pipettiervorrichtung nach Anspruch 3 oder 4, die eine Anzeigeeinrichtung (5) aufweist, auf der die jeweilige Sammlung von historischen Parameterwertesätzen dem Benutzer angezeigt werden kann, und wobei eine Sammlung von historischen Parameterwertesätzen dem Benutzer jeweils auf Anforderung durch den Benutzer als Übersicht, insbesondere als Liste, angezeigt wird (Funktion "Anzeige historischer Parameterwertesätze"), insbesondere durch Betätigen eines Bedienelementes der Bedieneinrichtung angezeigt wird, und wobei die Pipettiervorrichtung dazu ausgebildet ist, dass der Benutzer aus dieser Liste den gewünschten Parameterwertesatz auswählen kann und diesen mit einer einzigen Betätigung der Bedieneinrichtung als Betriebsparametersatz setzen kann.

6. Pipettiervorrichtung gemäß mindestens einem der vorherigen Ansprüche, wobei die Bedieneinrichtung mindestens ein Bedienelement mit variabler Funktion (Softkey) aufweist, insbesondere ein programmierbares Bedienelement aufweist, dessen Funktion insbesondere vom Benutzer programmierbar ist.

7. Pipettiervorrichtung gemäß mindestens einem der vorherigen Ansprüche, die eine Anzeigeeinrichtung (5) aufweist und eine Vielzahl von zumindest teilweise vordefinierten und in der Pipettiervorrichtung gespeicherten Anzeigeseiten anzeigen kann, wobei das Bedienelement mit variabler Funktion in Abhängigkeit von der angezeigten Anzeigenseite jeweils eine vorbestimmte Funktion aufweist.

8. Pipettiervorrichtung gemäß Anspruch 5 und 6 oder auch 7, wobei die Funktion des mindestens einen Bedienelementes mit variabler Funktion die Funktion der Anzeige historischer Parameterwertesätze in der Anzeigeeinrichtung ist.

9. Pipettiervorrichtung gemäß Anspruch 5, 6 und mindestens einem der vorherigen Ansprüche, wobei das mindestens eine programmierbare Bedienelement vom Benutzer so programmierbar ist, dass durch seine Betätigung wahlweise dem Benutzer eine Sammlung von historischen Parameterwertesätzen angezeigt werden kann oder dem Benutzer mindestens eine andere Information angezeigt werden kann, insbesondere eine Hilfe zur Erläuterung der Betriebsparameter eines Betriebsmodus.

10. Pipettiervorrichtung gemäß mindestens einem der vorherigen Ansprüche, wobei die Pipettiervorrichtung und/oder die Steuereinrichtung dazu ausgebildet ist, dass die Funktion des automatischen Speicherns des historischen Parameterwertesatzes vom Benutzer wahlweise aktivierbar und/oder deaktivierbar ist.

11. Pipettiervorrichtung gemäß Anspruch 3 und mindestens einem der vorherigen Ansprüche, die eine Anzeigeneinrichtung (5) und eine Zeiterfassungseinrichtung aufweist, wobei die Anzahl N1 der Parameterwertesätze chronologisch sortiert und insbesondere chronologisch sortiert angezeigt wird, wobei insbesondere der zuletzt gespeicherte historische Parameterwertesatz in einer Liste an erster, insbesondere oberster Stelle angezeigt wird.

12. Pipettiervorrichtung gemäß Anspruch 3 und mindestens einem der vorherigen Ansprüche, die eine Anzeigeneinrichtung und eine Zähleinrichtung aufweist, wobei die Zähleinrichtung die Anzahl N3 der Verwendungen eines bestimmten historischen Parameterwertesatzes jeweils zählt und in einer Speichereinrichtung der Pipettiervorrichtung speichert, wobei die Anzahl N1 der Parameterwertesätze gemäß der Anzahl N3 sortiert und insbesondere chronologisch sortiert angezeigt wird, wobei insbesondere der historische Parameterwertesatz mit der höchsten Häufigkeit N3 der Verwendung in einer Liste an erster, insbesondere oberster Stelle angezeigt wird.

13. Verfahren zum Betreiben einer elektrischen Pipettiervorrichtung (1), insbesondere der Pipettiervorrichtung gemäß Anspruch 1 bis 12, zum Steuern eines Pipettiervorgangs an mindestens einer fluiden Laborprobe gemäß mindestens eines Betriebsmodus der Pipettiervorrichtung, die eine elektrische Steuereinrichtung und eine Bedieneinrichtung aufweist, aufweisend die Schritte:
- Festlegen eines Betriebsparametersatzes durch den Benutzer der Pipettiervorrichtung mittels der mindestens einen Bedieneinrichtung (12, 13, 14a, 14b) der Pipettiervorrichtung, wobei der Betriebsparametersatz einem Betriebsmodus zugeordnet ist und jeweils mindestens einen Betriebsparameter umfasst, der ein während eines Ansaugschrittes des Pipettiervorgangs anzusaugendes Ansaugvolumen definiert und/oder ein während eines Abgabeschrittes abzugebendes Abgabevolumen definiert, wobei der Benutzer zum Festlegen des Betriebsparameters den gewünschten Wert des Betriebsparameters als Parameterwert auswählt und auf diese Weise einen Parameterwertesatz mit mindestens einem Parameterwert bestimmt;
- ein nach dem Bestimmen dieses Parameterwertesatz ohne weiteren Einfluss des Benutzers erfolgendes automatisches Speichern des mindestens einen vom Benutzer bestimmten Parameterwertesatzes, der dem Betriebsparametersatz eines Betriebsmodus zugeordnet ist, als der mindestens eine historische Parameterwertesatz dieses Betriebsmodus, in einer elektrischen Speichereinrichtung der Pipettiervorrichtung; - erneutes Bereitstellen des mindestens einen automatisch gespeicherten historischen Parameterwertesatz dieses Betriebsmodus zur nachfolgenden Steuerung des mindestens einen, gleichen Pipettiervorgangs.

## Claims

1. Pipetting apparatus (1), for performing an at least partially electrically controlled pipetting process on at least one fluid laboratory sample in accordance with at least one mode of operation of the pipetting apparatus, having
- an electric control device (17) for controlling the pipetting process, which is able to be controlled by an operating parameter set, which is used to control the pipetting process, which is able to be stipulated by a user and which is associated with a mode of operation and respectively comprises at least one operating parameter, which defines an aspirating volume to be aspirated during an aspirating step of the pipetting process and/or defines a discharge volume to be discharged during a discharge step of the pipetting process, wherein the user stipulates the operating parameter by selecting the desired value of the operating parameter as a parameter value and in this way determining a parameter value set having at least one parameter value,
- at least one operator control device (12, 13, 14a, 14b) for the stipulation of the operating parameter set by the user,
- an electric memory device (18) for storing the at least one parameter value set,
**characterized in that**
the electric control device (17) is configured to automatically store the at least one parameter value set determined by the user as the at least one historic parameter value set for this mode of operation in the memory device (18);
wherein the electric control device is configured to perform the automatic storage of the parameter value set without any further influence by the user after the user has selected this parameter value set by means of the at least one operator control device (12, 13, 14a, 14b); and
wherein the electric control device is designed to provide again, after the operating parameter set for this mode of operation has changed, the at least one automatically stored historic parameter value set for this mode of operation for the subsequent control of the at least one, same, pipetting process.

2. Pipetting apparatus according to claim 1, wherein the electric control device is configured to perform the automatic storage of the parameter value set after the pipetting process has been performed completely at least once.

3. Pipetting apparatus according to at least one of the previous claims, wherein at least one collection (setting history of operating parameters) of a number N1 of historic parameter value sets, with which the user is respectively provided and which the user can respectively select, is stored in the memory device.

4. Pipetting apparatus according to Claim 3, wherein the pipetting apparatus is configured to store a number N2 of collections of a number N1 of historic parameter value sets, wherein each collection of parameter value sets is associated with a particular mode of operation and wherein the user is respectively provided with a collection and the user can respectively select a parameter value set from this collection.

5. Pipetting apparatus according to Claim 3 or 4, which has a display device (5) on which the respective collection of historic parameter value sets can be displayed to the user, and wherein a collection of historic parameter value sets is displayed (function "display of historic parameter value sets") to the user as an overview, in particular as a list, at the respective request of the user, in particular by virtue of the operation of an operator control element of the operator control device, and wherein the pipetting apparatus is configured to allow the user to select the desired parameter value set from this overview and to set it as an operating parameter set by means of a single operation of the operator control device.

6. Pipetting apparatus according to at least one of the previous claims, wherein the operator control device has at least one operator control element having a variable function (softkey), the operator control element being, in particular, a programmable operator control element, the function of which, in particular, can be programmed.

7. Pipetting apparatus according to at least one of the previous claims, which has a display device (5) and can display a multiplicity of at least partially predefined display pages stored in the pipetting apparatus, wherein the operator control element having a variable function has a respective predetermined function on the basis of the displayed display page.

8. Pipetting apparatus according to claim 5 and 6 or also 7, wherein the function of the at least one operator control element having a variable function is the function of the display of historic parameter value sets in the display device.

9. Pipetting apparatus according to claim 5 and 6 and at least one of the previous claims, wherein the at least one programmable operator control element can be programmed by the user such that operation of said operator control element can either display a collection of historic parameter value sets to the user or can display at least one other piece of information to the user, in particular a help information for explaining the operating parameter of a mode of operation.

10. Pipetting apparatus according to at least one of the previous claims, wherein the pipetting apparatus and/or the control device is/are configured to allow the function of the automatic storage of the historic parameter value sets to be either activated and/or deactivated by the user.

11. Pipetting apparatus according to claim 3 and at least one of the previous claims, which has a display device (5) and a time detection device, wherein the number N1 of parameter value sets is sorted chronologically and is, in particular, displayed in chronologically sorted form, wherein, in particular, the most recently stored historic parameter value set is displayed at the first position, in particular, the topmost position, in a list.

12. Pipetting apparatus according to claim 3 and at least one of the previous claims, which has a display device and a counting device, wherein the counting device respectively counts the number N3 of uses of a particular historic parameter value sets and stores it in a memory device in the pipetting apparatus, wherein, in particular, the number N1 of parameter value sets is sorted, and in particular is displayed chronologically sorted, in accordance with the number N3, wherein, in particular, the historical parameter value set with the highest occurrence N3 of use is displayed at the first position, in particular, the topmost position, of a list.

13. Method for operating an electric pipetting apparatus (1), in particular the pipetting apparatus according to claim 1 to 12, to control a pipetting process on at least one fluid laboratory sample in accordance with at least one mode of operation of the pipetting apparatus, which has an electric control device and an operator control device, the method having the following steps:
- an operating parameter set is stipulated by the user of the pipetting apparatus by the operator control device (12, 13, 14a, 14b), wherein the operating parameter set is associated with a mode of operation and comprises respectively at least one operating parameter, which defines an aspirating volume to be aspirated during an aspirating step of the pipetting process and/or defines a discharge volume to be discharged during a discharge step of the pipetting process, wherein the user stipulates the value of the operating parameter by selecting the desired value of the operating parameter as a parameter value and in this way determines a parameter value set having at least one parameter value;
- after determining the parameter value set, the at least one parameter value set which is determined by the user and which is associated with the operating parameter set for a mode of operation, is automatically stored without further influence of the user as the at least one historic parameter value set for this mode of operation in an electric memory device of the pipetting apparatus;
- the at least one automatically stored historic parameter value set for this mode of operation is provided again for the subsequent control of the at least one, same, pipetting process.

## Revendications

1. Dispositif de pipetage (1), pour la mise en oeuvre d'un processus de pipetage commandé au moins en partie électriquement sur au moins un échantillon fluide de laboratoire selon au moins un mode de fonctionnement du dispositif de pipetage, comprenant
- un dispositif de commande électrique (17) destiné à commander le processus de pipetage, lequel processus peut être commandé par un ensemble de paramètres de fonctionnement pouvant être établi par l'utilisateur, lequel ensemble sert à commander le processus de pipetage, qui est associé à un mode de fonctionnement et qui comporte respectivement au moins un paramètre de fonctionnement qui définit un volume d'aspiration à aspirer pendant une étape d'aspiration du processus de pipetage et/ou un volume de distribution à distribuer pendant une étape de distribution, dans lequel l'utilisateur, pour établir le paramètre de fonctionnement, choisit la valeur souhaitée du paramètre de fonctionnement comme valeur de paramètre et détermine de cette façon un ensemble de valeurs de paramètre comprenant au moins une valeur de paramètre,
- au moins un dispositif de commande utilisateur (12, 13, 14a, 14b) permettant à l'utilisateur d'établir l'ensemble de paramètres de fonctionnement,
- un dispositif mémoire (18) électrique destiné à mettre en mémoire le au moins un ensemble de valeurs de paramètres,
**caractérisé en ce que**
le dispositif de commande électrique (17) est conçu pour mettre automatiquement en mémoire le au moins un ensemble de valeurs de paramètres déterminé par l'utilisateur en tant que le au moins un ensemble de valeurs de paramètres historiques de ce mode de fonctionnement dans le dispositif mémoire (18),
dans lequel le dispositif de commande électrique est conçu pour mettre en oeuvre la mise en mémoire automatique de l'ensemble de valeurs de paramètres sans autre intervention de l'utilisateur, après que l'utilisateur a choisi cet ensemble de valeurs de paramètres au moyen du au moins un dispositif de commande utilisateur (12, 13, 14a, 14b), et
dans lequel le dispositif de commande électrique est conçu, après une modification de l'ensemble de paramètres de fonctionnement de ce mode de fonctionnement, pour fournir à nouveau le au moins un ensemble de valeurs de paramètres historiques, automatiquement mis en mémoire, de ce mode de fonctionnement, pour la commande suivante du au moins un même processus de pipetage.

2. Dispositif de pipetage selon la revendication 1, dans lequel le dispositif de commande électrique est conçu pour mettre en oeuvre la mise en mémoire automatique de l'ensemble de valeurs de paramètres, après que le processus de pipetage a été entièrement mis en oeuvre au moins une fois.

3. Dispositif de pipetage selon au moins l'une des revendications précédentes, dans lequel au moins une collection (historique de réglage des paramètres de fonctionnement) d'un nombre N1 d'ensembles de valeurs de paramètres historiques, lesquels sont respectivement fournis à l'utilisateur et peuvent être respectivement choisis par l'utilisateur, est mise en mémoire dans le dispositif mémoire.

4. Dispositif de pipetage selon la revendication 3, dans lequel le dispositif de pipetage est conçu pour qu'un nombre N2 de collections d'un nombre N1 d'ensembles de valeurs de paramètres historiques soit mis en mémoire, dans lequel chaque collection d'ensembles de valeurs de paramètres est associée à un mode de fonctionnement déterminé et dans lequel une collection est respectivement fournie à l'utilisateur et respectivement un ensemble de valeurs de paramètres peut être choisi dans cette collection par l'utilisateur.

5. Dispositif de pipetage selon la revendication 3 ou 4, qui comprend un système d'affichage (5) sur lequel la collection respective d'ensembles de valeurs de paramètres historiques peut être montrée à l'utilisateur, et dans lequel une collection d'ensembles de valeurs de paramètres historiques est montrée à l'utilisateur respectivement à la demande de l'utilisateur sous forme d'aperçu, en particulier sous forme de liste (fonction « affichage des ensembles de valeurs de paramètres historiques »), en particulier à la suite de l'actionnement d'un élément de commande du dispositif de commande utilisateur, et dans lequel le dispositif de pipetage est conçu pour que l'utilisateur puisse choisir dans cette liste l'ensemble de valeurs de paramètres souhaité et l'enregistrer en tant qu'ensemble de paramètres de fonctionnement à l'aide d'un seul actionnement du dispositif de commande utilisateur.

6. Dispositif de pipetage selon au moins l'une des revendications précédentes, dans lequel le dispositif de commande utilisateur comprend au moins un élément de commande à fonction variable (touche programmable), en particulier un élément de commande programmable dont la fonction peut être programmée en particulier par l'utilisateur.

7. Dispositif de pipetage selon au moins l'une des revendications précédentes, qui comprend un système d'affichage (5) et qui peut afficher une pluralité de pages au moins en partie prédéfinies et mises en mémoire dans le dispositif de pipetage, dans lequel l'élément de commande à fonction variable présente respectivement une fonction prédéfinie en fonction de la page affichée.

8. Dispositif de pipetage selon la revendication 5 et 6 ou bien 7, dans lequel la fonction du au moins un élément de commande à fonction variable est la fonction d'affichage des ensembles de valeurs de paramètres historiques dans le système d'affichage.

9. Dispositif de pipetage selon la revendication 5, 6 et au moins l'une des revendications précédentes, dans lequel le au moins un élément de commande programmable peut être programmé par l'utilisateur, de sorte qu'une collection d'ensembles de valeurs de paramètres historiques peut être montée sélectivement à l'utilisateur à la suite de l'actionnement par celui-ci ou qu'au moins une autre information peut être montrée à l'utilisateur, en particulier une aide destinée à expliquer les paramètres de fonctionnement d'un mode de fonctionnement.

10. Dispositif de pipetage selon au moins l'une des revendications précédentes, dans lequel le dispositif de pipetage et/ou le dispositif de commande sont conçus pour que la fonction de la mise en mémoire automatique de l'ensemble de valeurs de paramètres historiques puisse être sélectivement activée et/ou désactivée par l'utilisateur.

11. Dispositif de pipetage selon la revendication 3 et au moins l'une des revendications précédentes, qui présente un système d'affichage (5) et un système de saisie des temps, dans lequel le nombre N1 des ensembles de valeurs de paramètres est trié de manière chronologique et en particulier affiché trié de manière chronologique, dans lequel en particulier l'ensemble de valeurs de paramètres historiques mis en mémoire le plus récemment est affiché sous forme de liste en première place.

12. Dispositif de pipetage selon la revendication 3 et au moins l'une des revendications précédentes, qui comprend un système d'affichage et un système de comptage, dans lequel le système de comptage compte respectivement le nombre N3 d'utilisations d'un ensemble de valeurs de paramètres historiques déterminé et le met en mémoire dans un dispositif mémoire du dispositif de pipetage, dans lequel le nombre N1 des ensembles de valeurs de paramètres est trié selon le nombre N3 et en particulier affiché trié de manière chronologique, dans lequel en particulier l'ensemble de valeurs de paramètres historiques présentant la fréquence N3 d'utilisation la plus élevée est affichée sous forme de liste en première place.

13. Procédé pour le fonctionnement d'un dispositif de pipetage (1) électrique, en particulier du dispositif de pipetage selon les revendications 1 à 12, pour la commande d'un processus de pipetage sur au moins un échantillon fluide de laboratoire selon au moins un mode de fonctionnement du dispositif de pipetage, qui présente un système de commande électrique et un dispositif de commande utilisateur, comprenant les étapes :
- d'établissement d'un ensemble de valeurs de paramètres par l'utilisateur du dispositif de pipetage au moyen du au moins un dispositif de commande utilisateur (12, 13, 14a, 14b) du dispositif de pipetage, dans lequel l'ensemble de paramètres de fonctionnement est associé à un mode de fonctionnement et comporte respectivement au moins un paramètre de fonctionnement qui définit un volume d'aspiration à aspirer pendant une étape d'aspiration du processus de pipetage et/ou qui définit un volume de distribution à distribuer pendant une étape de distribution, dans lequel l'utilisateur, pour établir le paramètre de fonctionnement, choisit la valeur souhaitée du paramètre de fonctionnement comme valeur de paramètre et détermine de cette façon un ensemble de valeurs de paramètres présentant au moins une valeur de paramètre ;
- de mise en mémoire automatique du au moins un ensemble de valeurs de paramètres déterminé par l'utilisateur, laquelle s'effectue après la détermination de cet ensemble de valeurs de paramètres sans autre intervention de l'utilisateur, lequel ensemble est associé à l'ensemble de paramètres de fonctionnement d'un mode de fonctionnement, en tant que le au moins un ensemble de valeurs de paramètres historiques de ce mode de fonctionnement, dans un dispositif mémoire électrique du dispositif de pipetage ;
- de fourniture à nouveau du au moins un ensemble de valeurs de paramètres historiques de ce mode de fonctionnement automatiquement mis en mémoire pour la commande suivante du au moins un même processus de pipetage.
